# EUROPÄISCHE PATENTSCHRIFT

(11) **EP 3 146 846 B1**
(45) Veröffentlichungstag und Bekanntmachung des Hinweises auf die Patenterteilung: **01.05.2019**
(21) Anmeldenummer: 15186294.3
(22) Anmeldetag: 22.09.2015
(51) Int. Cl.: A21D 2/18, A21D 2/22, A21D 2/36, A23L 19/12

(54) **KARTOFFELTEIGPRODUKT UND VERFAHREN ZU DESSEN HERSTELLUNG**
PRODUCT MADE FROM POTATO DOUGH AND ITS PRODUCTION
PÂTÉ COMPRENANT DES POMMES DE TERRE ET SA FABRICATION

(43) Veröffentlichungstag der Anmeldung: 29.03.2017
(73) Patentinhaber: Wewalka GmbH Nfg. KG, 2601 Sollenau (AT)
(72) Erfinder: Koller, Wolfgang, 7210 Mattersburg (AT); Selimaj, Mehmet, 2822 Bad Erlach (AT)
(74) Vertreter: KLIMENT & HENHAPEL

(56) Entgegenhaltungen:
- EP-A1- 1 036 509
- US-A- 4 293 582
- US-A1- 2006 188 638
- US-A1- 2006 188 639
- Anonymous: "Kartoffel--Knolle", Bäko Gruppe Nord, Brot Rezepte, 1. November 2010 (2010-11-01), Seiten 1-1, XP055232597, Gefunden im Internet: URL:http://www.baekogruppenord.de/mediadat abase/1281.pdf [gefunden am 2015-12-01]
- Anonymous: "BÄKO Gruppe Nord - Brot-Rezepte", BÄKO Gruppe Nord, 1. April 2012 (2012-04-01), Seiten 1-3, XP055232603, Gefunden im Internet: URL:http://www.baekogruppenord.de/index.ph p?mapid=209&PHPSESSID=e1d3b24dd4020fe91d68 48c8f967d6a3 [gefunden am 2015-12-01]
- DATABASE GNPD [Online] MINTEL; 1. September 2014 (2014-09-01), Anonymous: "Mashed Potatoes with Spinach", XP002751664, Database accession no. 2642649
- Cranbo: "Potato Substitutions", , 16. Dezember 2010 (2010-12-16), Seiten 1-4, XP002751665, Gefunden im Internet: URL:http://www.thefreshloaf.com/node/21128 /potato-substitutions [gefunden am 2015-11-30]

## Beschreibung

Die vorliegende Erfindung betrifft ein Kartoffelteigprodukt.

Die Kartoffel als Rohstoff für Lebensmittel besitzt in vielen Ländern einen hohen Stellenwert in der Ernährung der Menschen und wird dementsprechend vielfältig und häufig eingesetzt. Aufgrund ihrer Eigenschaften können Kartoffeln in unterschiedlichster Form zu verschiedensten Produkten verarbeitet werden. Üblicherweise werden Kartoffeln zunächst mit geeigneten Verfahren gegart (z.B. gekocht, dampfgegart, gedünstet, gebraten, gebacken, frittiert), um entweder direkt und unmittelbar verzehrt oder weiterverarbeitet zu werden. Typische Kartoffelprodukte sind neben frittierten Produkten wie Pommes Frites, Chips und Kartoffelpuffer beispielsweise Produkte aus Kartoffelteigen (z.B. Klöße bzw. Knödel, Gnocchi, Kartoffelnudel).

Für die Akzeptanz von Lebensmittelprodukten bei Konsumenten sind viele Parameter entscheidend. Einerseits muss das Produkt den geschmacklichen und optischen Vorstellungen des Konsumenten entsprechen, andererseits muss das Produkt einfach und schnell verarbeitet werden können. Zudem müssen auch industriell verarbeitete Kartoffeln und daraus hergestellte Kartoffelprodukte zusätzliche Eigenschaften aufweisen, die es ermöglichen derartige Produkte für einen verbraucherfreundlichen Zeitraum zu lagern, ohne dass es die ursprünglichen Eigenschaften wie beispielsweise Form, Konsistenz, Verarbeitbarkeit und Kocheigenschaften verliert. Um diese Vorgaben zu erfüllen, werden Kartoffelprodukte je nach Verarbeitungsgrad üblicherweise ungekühlt (z.B. Chips), gekühlt (z.B. Gnocchi) oder tiefgekühlt (z.B. Pommes Frites) ausgeliefert und gelagert, um anschließend weiterverarbeitet oder unmittelbar verzehrt zu werden.
In der US 4,293,582 werden Kartoffelteige beschrieben, die u.a. gekochte und zerdrückte Kartoffeln und Kartoffelflocken umfassen. Diese Kartoffelteige werden vorzugsweise zur Herstellung von extrudierten Kartoffelprodukten (z.B. Pommes Frites) verwendet.

In den beiden US Anmeldungen US 2006/188638 und US 2006/188639 werden Kartoffelteige beschrieben, die ein natürliches Aroma und eine leichtere Textur aufweisen sollen. Dabei werden zunächst rohe Kartoffeln zerkleinert und überschüssiges Wasser entfernt. Danach werden die geschnittenen Kartoffeln thermisch behandelt, um anschließend mit weiteren Teigbestandteilen, wie Kartoffelflocken und Kartoffelstärke, vermengt zu werden.
In diversen Artikeln über Kartoffel-Knollen im allgemeinen und über Brot-Rezepte im speziellen wird die Herstellung eines Teiges beschrieben, der u.a. Kartoffelflocken und Kartoffeln umfasst.

EP 1 036 509 offenbart Kartoffelteige, die neben pürierten Kartoffeln u.a. auch Kartoffelflocken Stärke in Form von Mehl und Proteine in Form von Gluten umfassen können.

Im Handel erhältliche Halbfertigprodukte aus Kartoffeln, welche von Konsumenten z.B. zu Gnocchi oder Klöße bzw. Knödel weiterverarbeitet werden können, werden heutzutage üblicherweise in getrockneter, lagerstabiler Form bereitgestellt. Dabei werden gekochte Kartoffeln vom Hersteller zu Brei zerdrückt und mittels Walzentrocknern getrocknet, um Kartoffelflocken zu produzieren. Diese Kartoffelflocken werden schließlich vom Konsumenten mit Wasser und sonstigen Zutaten wie z.B. Eiern versetzt und entsprechend weiterverarbeitet. Nachteil dieser Art von Produkten ist, dass diese keine frischen Kartoffeln enthalten und mehrere Arbeitsschritte und zusätzliche Zeit benötigt wird, bis ein verarbeitungsfähiges Kartoffelausgangsprodukt erzeugt werden kann. Andere ebenfalls am Markt erhältliche Produkte umfassen im Wesentlichen gepresste "frische" Kartoffeln, jedoch sind diese hinsichtlich Formbarkeit nur für bestimmte Produkte (wie z.B. Püree) einsetzbar. Nur mit zusätzlichem Aufwand (z.B. durch Zugabe von Eiern, Mehl, Wasser und dergleichen) kann daraus ein form- und kochstabiles und sensorisch einwandfreies Produkt hergestellt werden können.

Es ist Aufgabe der vorliegenden Erfindung ein Kartoffelprodukt bereitzustellen, welches frische Kartoffeln umfasst und lager- und formstabil ist.

Die vorliegende Erfindung betrifft daher ein Kartoffelteigprodukt umfassend
a) 45 bis 75 Gew% gegarte, zerkleinerte und geschälte Kartoffeln,
b) 3 bis 10 Gew% Kartoffelflocken und
c) 0,05 bis 4 Gew% mindestens eines als zellulosehaltiger Teil verzehrbarer Pflanzen oder Pflanzenteile gewonnenen pflanzlichen Faserstoffs.

Beim erfindungsgemäßen Kartoffelteigprodukt handelt es sich um einen sogenannten Frischteig bzw. um ein aus diesem Frischteig hergestelltes Fertigprodukt. Frischteige können im Kühlschrank gelagert und je nach Bedarf schnell und einfach weiterverarbeitet werden. Im Gegensatz dazu gibt es entsprechende Trockenprodukte (z.B. Mehlmischungen, Kartoffelflocken) oder tiefgekühlte Produkte, deren Haltbarkeit im Vergleich zu Frischteigen zwar erhöht ist, jedoch können diese nur mit größerem zeitlichen und manuellen Aufwand weiter verarbeitet werden. Zudem wird durch den Trocken- bzw. Gefrierprozess die natürliche Struktur der Ausgangsstoffe nachhaltig verändert, was sich mitunter im Endprodukt bemerkbar machen kann. Rohstoff- und rezepturbedingt bauen demgegenüber Frischteige durch chemische und enzymatische Prozesse trotz gekühlter Lagerung normalerweise rasch ab. Dabei können die Teige feucht und weich werden, wodurch sich u.a. die visko-elastischen Eigenschaften des Teiges während der gekühlten Lagerung verändern können. Diese Veränderungen der Teige haben auch einen negativen Einfluss auf die Verarbeitbarkeit und auf das Endprodukt selbst. Überraschenderweise zeigte sich, dass das erfindungsgemäße Kartoffelteigprodukt umfassend 45 bis 75 Gew% gegarte, zerkleinerte und geschälte Kartoffeln, 3 bis 10 Gew% Kartoffelflocken und 0,05 bis 4 Gew% mindestens eines als zellulosehaltiger Teil verzehrbarer Pflanzen oder Pflanzenteile gewonnenen pflanzlichen Faserstoffs über einen relative langen Zeitraum seine vorteilhaften Eigenschaften im Vergleich zu Frischteigen mit ähnlichen Zusammensetzungen beibehalten kann. Da die erfindungsgemäßen Frischteige in einem direkt verarbeitbaren Zustand Kunden angeboten wird, ist u.a. die Form- und Lagerstabilität von besonderer Bedeutung.

Neben den visko-elastischen Eigenschaften des erfindungsgemäßen Kartoffelteigprodukts sind auch die sensorischen Eigenschaften und die Kocheigenschaften von besonderer Bedeutung. Auch hier zeigte sich, dass das erfindungsgemäße Kartoffelteigprodukt im Vergleich zu Kartoffelteigprodukten mit einer anderen Zusammensetzung wesentlich vorteilhafter ist (siehe Beispiele).

"Kartoffelteigprodukt", wie hier verwendet, bezeichnet ein Halbfertigprodukt oder Fertigprodukt, das einen Kartoffelteig mit der erfindungsgemäßen Zusammensetzung umfasst. Das Kartoffelteigprodukt der vorliegenden Erfindung kann weiterverarbeitbar (z.B. zu Knödel oder Gnocchi formbar) oder in verzehrbaren Zustand (z.B. als gegarter Knödel) vorliegen. Der Begriff "Kartoffelteig" bezeichnet dabei ein Gemenge aus gegarten und zerkleinerten Kartoffeln, Wasser sowie weiteren teilweise fakultativen Rezepturbestandteilen, wobei der Großteil des Kartoffelteigs aus gegarten und zerkleinerten Kartoffeln besteht.

"Gegart" bedeutet, dass die rohen und gewaschenen Kartoffeln durch Zufuhr von Energie in einen verzehrbaren Zustand überführt werden. Beim Garen werden u.a. Proteine denaturiert, Zellen aufgeschlossen und Stärke verkleistert. Die im erfindungsgemäßen Teig eingesetzten Kartoffeln werden unter Verwendung von Wasser feucht gegart. Dabei werden die Kartoffeln beispielsweise gekocht (d.h. gegart in Wasser bei etwa 100°C) oder gedämpft (gegart in Wasserdampf).

Die im erfindungsgemäßen Kartoffelteigprodukt eingebrachten Kartoffeln sind zerkleinert. "Zerkleinert" im Sinne der Erfindung bedeutet, dass die gegarten und geschälten Kartoffeln mittels Fleischwolf bzw. Faschiermaschine, Kartoffelpresse, Passiermühle und dergleichen durch z.B. ein Sieb gepresst werden, wobei das Sieb vorzugsweise eine Lochung von 1 bis 12 mm, noch mehr bevorzugt von 2 bis 11 mm, noch mehr bevorzugt von 3 bis 10 mm, noch mehr bevorzugt von 5 bis 10 mm, noch mehr bevorzugt von 6 bis 8 mm, aufweist. Da es besonders bevorzugt ist, dass das erfindungsgemäße Kartoffelteigprodukt kleinere Kartoffelstücke aufweist, weist das verwendete Sieb eine Lochung von 7, 8, 9 oder 10 mm auf.

Zur Herstellung von "Kartoffelflocken" werden gegarte und geschälte Kartoffeln getrocknet, vorzugsweise mit einem Walzentrockner. Die Kartoffelflocken weisen vorzugsweise eine Restfeuchte von 1 bis 10%, vorzugsweise von 2 bis 8 %, noch mehr bevorzugt von 3 bis 6%, auf.

Der Begriff "pflanzliche Faserstoffe" umfasst zellulosehaltige Teile verzehrbarer Pflanzen bzw. Pflanzenteile wie Kartoffeln, Leguminosen, insbesondere Erbsen, Flohsamen und dergleichen. Verfahren zur Herstellung dieser Faserstoffe sind dem Fachmann hinreichend bekannt. Üblicherweise wird bei diesen Verfahren die Stärke aus dem Brei von infrage kommenden Pflanzen bzw. Pflanzenteilen entfernt.

Das erfindungsgemäße Kartoffelteigprodukt ist in der beanspruchten Zusammensetzung im nicht gegarten und endverarbeiteten Zustand "formstabil" und "lagerstabil". "Lagerstabil" bedeutet, dass das erfindungsgemäße Kartoffelteigprodukt über eine längeren Zeitraum von mindestens vier, vorzugsweise mindestens sechs, Wochen bei Temperaturen zwischen 2°C und 8°C, vorzugsweise zwischen 3°C und 6°C, im Wesentlichen ohne Verderb oder mikrobielles Wachstum gelagert werden kann. Zudem ändern sich in diesem Zeitraum auch die Weiterverarbeitbarkeit und die Kocheigenschaften des Produkts nicht bzw. nicht wesentlich. "Formstabil" bedeutet, dass das erfindungsgemäße Kartoffelteigprodukt während der Lagerung seine Form - ohne oder bei nur geringer äußerlicher Krafteinwirkung - im Wesentlichen nicht ändert. Die Formstabilität kann mit einem Texturanalysegerät bestimmt werden (siehe Beispiel 3). Eine ausreichende Formstabilität ist dahingehend von Bedeutung, damit die Form des Kartoffelteigprodukts (z.B. ein lose verpackter Teigstrang mit 3 bis 6 cm Durchmesser) während der Lagerung und des Transports im Wesentlichen unverändert bleibt.

"Gew%", wie hier verwendet, bezieht sich immer auf das Gesamtgewicht des erfindungsgemäßen Kartoffelteigprodukts bzw. auf die Gesamtheit der Zutaten, die im erfindungsgemäßen Kartoffelteigprodukt vorhanden sind. Die etwaige Differenz zu 100 Gew% wird vorzugsweise durch Wasser ergänzt.

Gemäß einer bevorzugten Ausführungsform der vorliegenden Erfindung umfasst das Kartoffelteigprodukt 50 bis 75 Gew%, vorzugsweise 50 bis 70 Gew%, noch mehr bevorzugt 50 bis 65 Gew%, noch mehr bevorzugt 55 bis 75 Gew%, noch mehr bevorzugt 55 bis 70 Gew%, noch mehr bevorzugt 55 bis 65 Gew%, noch mehr bevorzugt 60 bis 75 Gew%, noch mehr bevorzugt 60 bis 70 Gew%, insbesondere 62 bis 66 Gew%, gegarte, zerkleinerte und geschälte Kartoffeln.

Vorzugsweise werden im erfindungsgemäßen Teig Kartoffeln verwendet, die einen Stärkegehalt von 13,5 bis 15% (gemessen auf das Frischgewicht) aufweisen. Sollten die Kartoffeln diesen Stärkegehalt nicht aufweisen, kann der Stärkegehalt im Teig durch Zugabe von beispielsweise zusätzlicher Stärke oder zusätzlichem Wasser reguliert werden.

Gemäß einer besonders bevorzugten Ausführungsform der vorliegenden Erfindung umfasst das Kartoffelteigprodukt 3 bis 9 Gew%, vorzugsweise 3 bis 8 Gew%, noch mehr bevorzugt 3 bis 7 Gew%, noch mehr bevorzugt 4 bis 10 Gew%, noch mehr bevorzugt 4 bis 9 Gew%, noch mehr bevorzugt 4 bis 8 Gew%, noch mehr bevorzugt 4 bis 7 Gew%, noch mehr bevorzugt 5 bis 10 Gew%, noch mehr bevorzugt 5 bis 9 Gew%, noch mehr bevorzugt 5 bis 8 Gew%, noch mehr bevorzugt 5 bis 7 Gew%, noch mehr bevorzugt 6 bis 10 Gew%, noch mehr bevorzugt 6 bis 9 Gew%, noch mehr bevorzugt 6 bis 8 Gew%, noch mehr bevorzugt 6 bis 7 Gew%, Kartoffelflocken.

Das erfindungsgemäße Kartoffelteigprodukt umfasst vorzugsweise 0,1 bis 4 Gew%, vorzugsweise 0,2 bis 4 Gew%, noch mehr bevorzugt 0,3 bis 4 Gew%, noch mehr bevorzugt 0,4 bis 4 Gew%, noch mehr bevorzugt 0,5 bis 4 Gew%, noch mehr bevorzugt 0,05 bis 3 Gew%, noch mehr bevorzugt 0,1 bis 3 Gew%, noch mehr bevorzugt 0,2 bis 3 Gew%, noch mehr bevorzugt 0,3 bis 3 Gew%, noch mehr bevorzugt 0,4 bis 3 Gew%, noch mehr bevorzugt 0,5 bis 3 Gew%, %, noch mehr bevorzugt 0,05 bis 2 Gew%, noch mehr bevorzugt 0,1 bis 2 Gew%, noch mehr bevorzugt 0,2 bis 2 Gew%, noch mehr bevorzugt 0,3 bis 2 Gew%, noch mehr bevorzugt 0,4 bis 2 Gew%, noch mehr bevorzugt 0,5 bis 2 Gew%, %, noch mehr bevorzugt 0,05 bis 1 Gew%, noch mehr bevorzugt 0,1 bis 1 Gew%, noch mehr bevorzugt 0,2 bis 1 Gew%, noch mehr bevorzugt 0,3 bis 1 Gew%, noch mehr bevorzugt 0,4 bis 1 Gew%, noch mehr bevorzugt 0,5 bis 1 Gew%, noch mehr bevorzugt 0,4 bis 0,6 Gew%, mindestens eines als zellulosehaltiger Teil verzehrbarer Pflanzen oder Pflanzenteile gewonnenen pflanzlichen Faserstoffs.

Das erfindungsgemäße Kartoffelteigprodukt kann mindestens ein, vorzugsweise mindestens zwei, noch mehr bevorzugt mindestens drei, pflanzliche Faserstoffe unterschiedlicher Herkunft umfassen.

Gemäß einer besonders bevorzugten Ausführungsform der vorliegenden Erfindung ist der mindestens eine pflanzliche Faserstoff ausgewählt ist aus der Gruppe bestehend aus einem Faserstoff aus Kartoffel, Leguminosen, insbesondere Erbsen, und Flohsamen, wobei Faserstoffe von Kartoffeln besonders bevorzugt sind. Geeignete pflanzliche Faserstoffe bzw. Pflanzenfasern zeichnen sich durch einen hohen Zellulosegehalt aus. Pflanzenfasern sind in der Lage verhältnismäßig große Mengen an Wasser zu binden.

Gemäß einer ganz besonders bevorzugten Ausführungsform der vorliegenden Erfindung umfasst das erfindungsgemäße Kartoffelteigprodukt 60 bis 70 Gew% gegarte, zerkleinerte und geschälte Kartoffeln, 6 bis 8 Gew% Kartoffelflocken und 0,4 bis 0,6 Gew% Faserstoffe aus Kartoffeln.

Neben gegarte, zerkleinerten und geschälten Kartoffeln, Kartoffelflocken und als zellulosehaltiger Teil verzehrbarer Pflanzen oder Pflanzenteile gewonnene pflanzliche Faserstoffe kann das erfindungsgemäße Kartoffelteigprodukt weitere Inhaltsstoffe umfassen.

Gemäß einer bevorzugten Ausführungsform der vorliegenden Erfindung umfasst das erfindungsgemäße Kartoffelteigprodukt 6 bis 20 Gew%, vorzugsweise 7 bis 20 Gew%, noch mehr bevorzugt 8 bis 20 Gew%, noch mehr bevorzugt 9 bis 20 Gew%, noch mehr bevorzugt 10 bis 20 Gew%, noch mehr bevorzugt 11 bis 20 Gew%, noch mehr bevorzugt 6 bis 18 Gew%, noch mehr bevorzugt 7 bis 18 Gew%, noch mehr bevorzugt 8 bis 18 Gew%, noch mehr bevorzugt 9 bis 18 Gew%, noch mehr bevorzugt 10 bis 18 Gew%, noch mehr bevorzugt 11 bis 18 Gew%, noch mehr bevorzugt 6 bis 16 Gew%, noch mehr bevorzugt 7 bis 16 Gew%, noch mehr bevorzugt 8 bis 16 Gew%, noch mehr bevorzugt 9 bis 16 Gew%, noch mehr bevorzugt 10 bis 16 Gew%, noch mehr bevorzugt 11 bis 16 Gew%, noch mehr bevorzugt 6 bis 14 Gew%, noch mehr bevorzugt 7 bis 14 Gew%, noch mehr bevorzugt 8 bis 14 Gew%, noch mehr bevorzugt 9 bis 14 Gew%, noch mehr bevorzugt 10 bis 14 Gew%, noch mehr bevorzugt 11 bis 14 Gew%, pflanzliche Stärke.

Diese pflanzliche Stärke wird dem erfindungsgemäßen Kartoffelteigprodukt zusätzlich zu der bereits durch die Kartoffeln vorhandenen Stärke eingebracht. Die zugesetzte pflanzliche Stärke ist vorzugsweise nativ und somit nicht modifiziert. Stärke zeichnet sich vor allem durch ihre Wasserbindungsfähigkeit aus. Des Weiteren kann die Zugabe von Stärke die Stabilität, die sensorischen Eigenschaften und die Kocheigenschaften des erfindungsgemäßen Kartoffelteigprodukts beeinflussen.

Gemäß einer besonders bevorzugten Ausführungsform der vorliegenden Erfindung ist die pflanzliche Stärke ausgewählt aus der Gruppe bestehend aus einer Stärke aus Kartoffeln, Reis, Mais, Weizen und Kombinationen davon, wobei die verwendete Stärke besonders bevorzugt von Kartoffeln stammt.

Gemäß einer bevorzugten Ausführungsform der vorliegenden Erfindung Kartoffelteigprodukt umfasst das Kartoffelteigprodukt 2 bis 8 Gew%, vorzugsweise 2 bis 7 Gew %, noch mehr bevorzugt 2 bis 6 Gew%, noch mehr bevorzugt 2 bis 5 Gew%, noch mehr bevorzugt 3 bis 8 Gew%, noch mehr bevorzugt 3 bis 7 Gew %, noch mehr bevorzugt 3 bis 6 Gew%, noch mehr bevorzugt 3 bis 5 Gew%, noch mehr bevorzugt 4 bis 8 Gew%, noch mehr bevorzugt 4 bis 7 Gew %, noch mehr bevorzugt 4 bis 6 Gew%, noch mehr bevorzugt 4 bis 5 Gew%, Getreidegrieß, vorzugsweise Hartweizengrieß, umfasst.

Die Zugabe von Grieß zum erfindungsgemäßen Kartoffelteigprodukt verbessert bzw. verlängert die Wasserhaltefähigkeit des Kartoffelteigprodukts, so dass das Produkt in der Lage ist, im Wesentlichen das gesamte Wasser während der Lagerzeit zu halten und nicht an die Umgebung abzugeben.

Der Begriff "Grieß" bezeichnet kleinkörnig gemahlene Getreideerzeugnisse. Die Partikelgröße des Grießes beträgt vorzugsweise 0,2 bis 1,5 mm, noch mehr bevorzugte 0,3 bis 1 mm.

Neben den bereits genannten Zutaten und neben Wasser kann das erfindungsgemäße Kartoffelteigprodukt Speisesalz (NaCl), pH regulierende Substanzen, Antioxidantien und Konservierungsstoffe umfassen.

Das erfindungsgemäße Kartoffelteigprodukt kann 0 bis 2 %, vorzugsweise 0,1 bis 1,5 %, noch mehr bevorzugt 0,2 bis 1%, noch mehr bevorzugt 0,3 bis 0,6, insbesondere 0,5%, Speisesalz umfassen.

Das erfindungsgemäße Kartoffelteigprodukt kann 0 bis 0,8 %, vorzugsweise 0,05 bis 0,6 %, noch mehr bevorzugt 0,08 bis 0,5%, noch mehr bevorzugt 0,1 bis 0,4, Konservierungsmittel umfassen. Bevorzugte Konservierungsmittel sind Sorbinsäure und deren Salze, wie Kaliumsorbat, Natriummetabisulfit, und Kombinationen davon.

Um den pH Wert des Kartoffelteigprodukts evtl. zu regulieren können beispielsweise lebensmittelverträgliche Säuren, wie z.B. Zitronensäure, dazugegeben werden. Der pH-Wert des erfindungsgemäßen Kartoffelteigprodukts ist vorzugsweise leicht sauer und kann zwischen pH 5 und pH 6,5 schwanken.

Ein weiterer Aspekt der vorliegenden Erfindung betrifft ein Verfahren zur Herstellung eines erfindungsgemäßen Kartoffelteigprodukts umfassend den Schritt des Vermischens von 45 bis 75 Gew% gegarte, zerkleinerte und geschälte Kartoffeln, 3 bis 10 Gew% Kartoffelflocken und 0,05 bis 4 Gew% mindestens eines als zellulosehaltiger Teil verzehrbarer Pflanzen oder Pflanzenteile gewonnenen pflanzlichen Faserstoffs, wie oben definiert.

Nach Zerkleinerung der gegarten Kartoffeln werden diese zumindest mit den Kartoffelflocken und dem mindestens einem pflanzlichen Faserstoff vermengt. Dabei kann z.B. eine Knetmaschine herangezogen werden. Nachdem die Zutaten gut vermischt wurden, kann der daraus entstehende Teig beispielsweise stranggepresst, portioniert und verpackt werden. Da das erfindungsgemäße Kartoffelteigprodukt formstabil ist, ist es nicht nötig dieses mittels in eine eng anliegende Außenverpackung (z.B. Außenhülle wie bei Würsten) einzubringen.

Die vorliegende Erfindung wird anhand der folgenden Figuren und Beispiele eingehender erläutert, ohne jedoch auf diese beschränkt zu sein.
Fig. 1 zeigt ein Kraft-Zeit-Diagramm, welches die mit einem Texturanalysegerät gemäß Beispiel 3 aufgenommenen wurde. In diesem Diagramm sind die gemittelten Maximalwerte der Widerstandskraft eines in den Teig eindringenden Messkörpers in Abhängigkeit der Lagerzeit dargestellt. Es wurden jeweils sechs unabhängig voneinander hergestellte Proben untersucht.

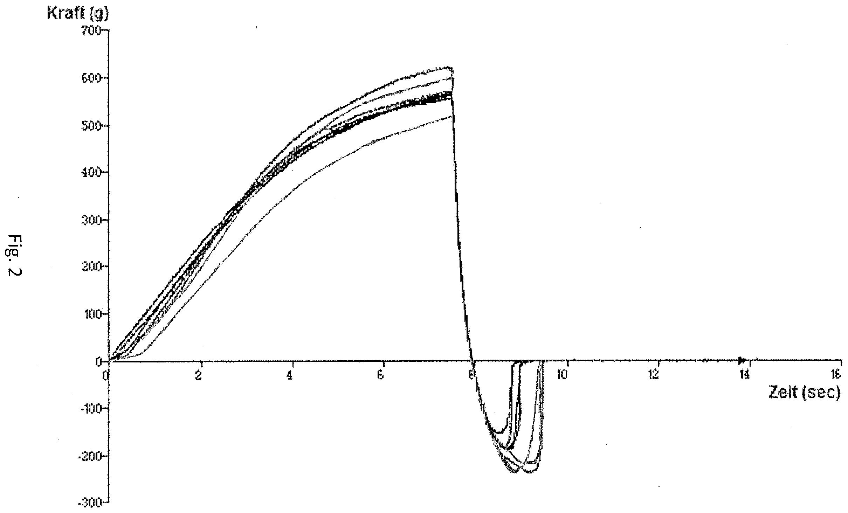

Fig. 2 zeigt exemplarisch ein Kraft-Zeit-Diagramm, welches mit einem Teig mit der Zusammensetzung 1 mit einem Texturanalysegerät gemäß Beispiel 3 aufgenommen wurde. Die einzelnen Kurven stellen Messungen verschiedener Proben dar.

### BEISPIELE:

### Beispiel 1: Herstellung von Kartoffelteigen

Geschälte und gegarte Kartoffeln wurden mittels einer Faschiermaschine mit 8 mm Durchmesser zerkleinert. Die trockenen Zutaten (siehe unten) wurden in einer Doppelspiralkneter (Fa. Diosna, Deutschland) miteinander vermischt. Im Anschluss daran wurden die faschierten Kartoffeln und die flüssigen Komponenten dazugegeben. Die gesamte Mischung wurde für etwa 7 bis 8 Minuten geknetet.

Die fertige Kartoffelmasse wurde in eine Portioniermaschine (Vakuumfüllmaschine; Fa. Vemag, Deutschland) gegeben, wo sie über ein Vakuumsystem angesaugt und über ein Rohrsystem in einen Endlosstrang auf das Austragungsband mit einem Durchmesser von ca. 4,5 cm ausgepresst wurde. Auf einem Schneideband wurde der Teigstrang in Portionen mit einer Länge von ca. 24 cm geschnitten. Die einzelnen Kartoffelteigrollen wurden auf geeignete Kartonunterlagen, die neben dem Boden eine seitlich Begrenzung aufweisen, aufgebracht und mit Folie versehen. Die Kartoffelteige wurden bis zu ihrer Verwendung bei ca. 0°C bis +4°C gelagert.

Kartoffelteige mit den folgenden Zusammensetzungen wurden hergestellt:

| **Zusammensetzung 1** | |
|---|---|
| Faschierte, frische, gegarte Kartoffeln | 64% |
| Kartoffelstärke | 12% |
| Kartoffelflocken | 7% |
| Hartweizengrieß | 5% |
| Ascorbinsäure | 0,03% |
| Kartoffelfasern | 0,5% |
| Wasser | ad 100% |

| **Zusammensetzung 2 (ohne Kartoffelfasern)** | |
|---|---|
| Faschierte, frische, gegarte Kartoffeln | 64% |
| Kartoffelstärke | 12% |
| Kartoffelflocken | 7% |
| Hartweizengrieß | 5% |
| Ascorbinsäure | 0,03% |
| Kartoffelfasern | - |
| Wasser | ad 100% |

| **Zusammensetzung 3 (5% Kartoffelfasern)** | |
|---|---|
| Faschierte, frische, gegarte Kartoffeln | 60% |
| Kartoffelstärke | 12% |
| Kartoffelflocken | 6% |
| Hartweizengrieß | 4% |
| Ascorbinsäure | 0,03% |
| Kartoffelfasern | 5% |
| Wasser | ad 100% |

| **Zusammensetzung 4 (2% Kartoffelflocken)** | |
|---|---|
| Faschierte, frische, gegarte Kartoffeln | 68% |
| Kartoffelstärke | 13% |
| Kartoffelflocken | 2% |
| Hartweizengrieß | 5% |
| Ascorbinsäure | 0,03% |
| Kartoffelfasern | 0,5% |
| Wasser | ad 100% |

| **Zusammensetzung 5 (12% Kartoffelflocken)** | |
|---|---|
| Faschierte, frische, gegarte Kartoffeln | 60% |
| Kartoffelstärke | 12% |
| Kartoffelflocken | 12% |
| Hartweizengrieß | 5% |
| Ascorbinsäure | 0,03% |
| Kartoffelfasern | 0,5% |
| Wasser | ad 100% |

| **Zusammensetzung 6 (40% frische Kartoffeln)** | |
|---|---|
| Faschierte, frische, gegarte Kartoffeln | 40% |
| Kartoffelstärke | 21% |
| Kartoffelflocken | 12% |
| Hartweizengrieß | 8% |
| Ascorbinsäure | 0,05% |
| Kartoffelfasern | 0,9% |
| Wasser | ad 100% |

| **Zusammensetzung 7 (80% frische Kartoffeln)** | |
|---|---|
| Faschierte, frische, gegarte Kartoffeln | 80% |
| Kartoffelstärke | 7% |
| Kartoffelflocken | 4% |
| Hartweizengrieß | 3% |
| Ascorbinsäure | 0,02% |
| Kartoffelfasern | 0,3% |
| Wasser | ad 100% |

| **Zusammensetzung 8 (0,05% Kartoffelfasern)** | |
|---|---|
| Faschierte, frische, gegarte Kartoffeln | 64% |
| Kartoffelstärke | 12% |
| Kartoffelflocken | 7% |
| Hartweizengrieß | 5% |
| Ascorbinsäure | 0,03% |
| Kartoffelfasern | 0,05% |
| Wasser | ad 100% |

### Beispiel 2: Optische und sensorische Untersuchungen; Kochverhalten

Jeweils 60g der in Beispiel 1 angeführten Zusammensetzungen wurden zu Knödel geformt und 15 min in ca. 90°C bis 95°C heißen Wasser gegeben. Vor dem Garen und im Anschluss daran wurde die Farbe der Knödel mit jener von frischen, gegarten und geschälten Kartoffeln verglichen. Es zeigte sich, dass gekochte Knödel der Zusammensetzungen 3 und 6 eine signifikant dunklere Farbe aufwiesen, als die geschälten Kartoffeln bzw. als die Klöße bzw. Knödel der übrigen Zusammensetzungen. Dies könnte einerseits auf den hohen Kartoffelfasergehalt, andererseits auf den relativ geringen Anteil an frischen, gegarten Kartoffeln zurückzuführen zu sein. Daher sind Zusammensetzungen 3 und 6 allein aufgrund ihrer Farbe vor und nach dem Garen ungeeignet, um verkauft zu werden.

Die Kochversuche zeigten zudem, dass einige Zusammensetzungen zu gegarten Knödel führten, deren Mundgefühl und Bissfestigkeit nicht jenen Klößen bzw. Knödel entsprechen, die mittels herkömmlichen Rezepten und Verfahren hergestellt wurden und die von den Konsumenten als bekömmlich angesehen werden. Knödel hergestellt mit den Zusammensetzungen 3, 5 und 6 wurden von den Testpersonen (n=12) als sehr hart, ungewöhnlicher Textur und mit unangenehmen Mundgefühl beschrieben. U.a. stellten die Testpersonen fest, dass der Teig der Knödel beim Kauen an den Zähnen teilweise kleben bleibt. Im Gegensatz dazu überzeugten die Knödel mit den Zusammensetzungen 1 und 8 alle Testpersonen. Vor allem die natürliche Farbe, die Textur, das Mundgefühl und der natürliche Geschmack wurden besonders hervorgestrichen. Zu einem ähnlichen Ergebnis führte die sensorische Beurteilung von Klößen bzw. Knödel mit der Zusammensetzung 4, wenn auch diese im Vergleich zu jenen mit der Zusammensetzung 1, hinsichtlich Textur und Mundgefühl ein wenig schlechter abgeschnitten haben.

Knödel hergestellt mit Zusammensetzung 7 waren sowohl vor als auch nach dem Garen sehr weich und zerfielen größtenteils während des Garens. Beim Garen dieses Teigs trübte sich das Wasser rasch und intensiv ein und nach knapp einer Minute waren bereits von den Klößen bzw. Knödeln losgelöste Teile sichtbar. Aus diesem Grund wurden diese Knödel nicht für einen sensorischen Test herangezogen. Auch Knödel mit der Zusammensetzung 2 zeigten beim Garen ähnliche Ergebnisse, auch wenn deren Zerfall während des Garens geringer war. Beim Herausnehmen aus dem Wasser hatten diese Knödel nicht mehr die ursprüngliche Form sondern waren deformiert und hatten ein für Knödel ungeeignete Struktur. Auch diese Knödel wurden für weitere sensorische Tests nicht herangezogen, da das Kochverhalten und die Formstabilität nach dem Kochen für ein kommerzielles Produkt unzufriedenstellend waren. Demgegenüber zeigten Knödel mit den Zusammensetzung 1, 3, 4, 5, 6 und8 ein gutes bzw. akzeptables Kochverhalten.

Die Kochversuche mit Knödeln mit den Zusammensetzungen 2 und 8 zeigten überraschenderweise, dass die Zugabe von lediglich 0,05 Gew% pflanzlicher Faserstoffe einen erheblichen Einfluss u.a. auf das Kochverhalten hat. Durch die Zugabe von Faserstoffen kann somit ein Kartoffelteigprodukt hergestellt werden, welches im Vergleich zu Teigen ohne Fasern gute Kocheigenschaften aufweist und in den sensorischen Tests zu überzeugen vermag.

### Beispiel 3: Form- und Lagerstabilität

Die einfachste Methode, um die Formstabilität von homogenen Produkten wie Kartoffelteigen zu ermitteln, ist ein einfacher Penetrationstest, bei dem die benötigte Kraft für das Eindringen eines Prüfkörpers in die Probe ("Widerstandskraft") aufgezeichnet wird. Dieser Test wird häufig eingesetzt und liefert hervorragende Ergebnisse und Aussagen hinsichtlich Festigkeit und somit Formstabilität eines Probe.

Um die Form- und Lagerstabilität der Kartoffelteige gemäß Beispiel 1 zu untersuchen, wurden diese 35 Tage bei einer Temperatur von 4°C gelagert. An den Tagen 1, 7, 14, 21, 27 und 35 nach Herstellung wurden Proben entnommen und in einem Texturanalysegerät (Texture Analyser TA.XT plus; Stable Micro Systems Ltd., Großbritannien) untersucht. Die Teige, die während der Messung eine Temperatur von 4 bis 5°C aufwiesen, wurden zur Probenvorbereitung in 5 cm breite Scheiben geschnitten und mit einem zylindrischen Messkörper mit 25 mm Durchmesser und einer Länge von 3,5 cm penetriert. Die Proben wurden zentral unter dem Messkörper auf einer ebenen Fläche positioniert. Der Messkörper war an eine mechanisch bewegliche Kraftmesszelle montiert und wurde zur Kraftmessung mit konstanter Geschwindigkeit über eine vorgegebene Wegstrecke Richtung Probe gesenkt. Nach Überschreiten der Auslösekraft (d.h. nach Eintritt des Messkörpers in den Teig) wurden entsprechende Kraft-Zeit-Diagramme aufgenommen, wobei der Messkörper über einen Zeitraum von 7,5 Sekunden 15 mm in die Proben gedrückt wurde. Die Kraft, die nach Eindringen des Messkörpers über die zuvor genannte Länge in die Probe gemessen wurde, wurde als das Maximum der Messkurve angegeben.

**Tabelle A: Messeinstellungen am Texturanalysegerät**

| Test Art | Druck |
|---|---|
| Vor Geschwindigkeit | 5 mm/sec |
| Test Geschwindigkeit: | 2 mm/sec |
| Rück Geschwindigkeit: | 5 mm/sec |
| Ziel Parameter: | Weg |
| Weg: | 15,000 mm |
| Anzahl: | 1 |
| Auslösewert: | Auto (Kraft) |
| Auslöse Kraft: | 5,0 g |

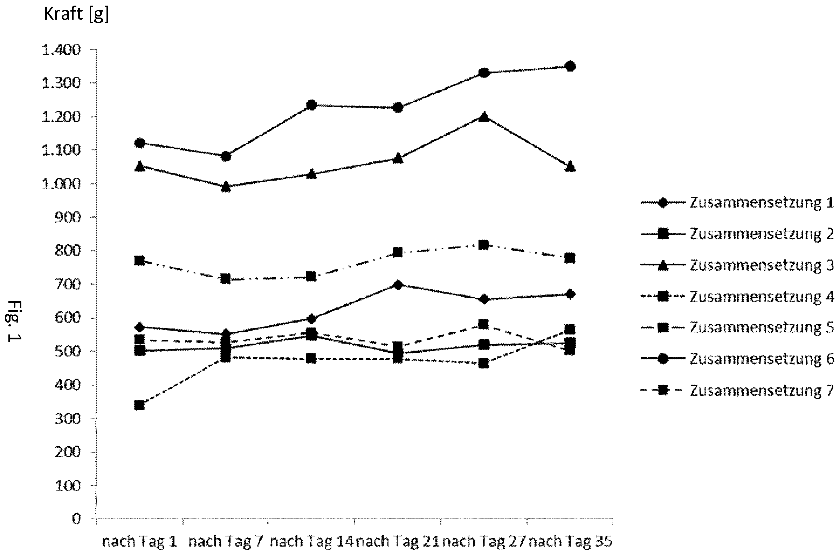

Das Maximum der Messkurve des Teiges mit der Zusammensetzung 1 wurde als Referenzwert herangezogen, da dieser Teig in Hinblick auf die Form- und Lagerstabilität und auch in Hinblick auf die Verarbeitbarkeit, der Kocheigenschaften und der sensorischen Eigenschaften im Vergleich zu den Teigen mit den Zusammensetzungen 2 bis 7 die besten Ergebnisse lieferte. Der Teig mit der Zusammensetzung 1 war entsprechend formstabil und veränderte seine Form - ohne äußere Krafteinwirkung - über einen Zeitraum von 35 Tagen bei den üblichen Lagertemperaturen von 0°C bis 4°C nicht. Zudem war dieser Teig einfach formbar und die neue Form (z.B. Knödel) war ebenfalls über 35 Tage unverändert. Die frische Kartoffelfarbe des Teiges mit der Zusammensetzung 1 blieb über einen Zeitraum von 35 Tagen konstant und war am Ende der Untersuchungen ident mit dem Tag, der nach einem Tag gemessen wurde. Zudem änderte sich die Farbe des Teigs während des Garens unwesentlich. Auch die Kocheigenschaften und die sensorischen Eigenschaften unmittelbar vor der Verkostung gegarter Knödel blieben über diesen Zeitraum unverändert. Teige mit der Zusammensetzung 8, die u.a. 0,05% Kartoffelfasern umfassten, zeigten vergleichbare Form-, Koch- und sensorische Eigenschaften wie Teige mit der Zusammensetzung 1. Eine ein Tag nach Herstellung des Teiges mit der Zusammensetzung 8 im Texturanalysegerät untersuchte Probe, zeigte, dass dieser Teig eine vergleichbare Formstabilität aufwies wie der Teig mit der Zusammensetzung 1. Im Gegensatz dazu war der Teig ohne Kartoffelfasern (Zusammensetzung 2) - einen Tag nach dessen Herstellung - weicher und somit weniger formstabil als erwünscht (siehe Fig. 1).

Aus Fig. 1 geht hervor, dass die Teige mit den Zusammensetzungen 3, 5 und 6 im Vergleich zum Teig mit der Zusammensetzung 1 signifikant härter (zeigen eine höhere Widerstandskraft beim Eindringen eines Messkörpers in den Teig) und somit für die erfindungsgemäßen Zwecke ungeeignet sind. Der Teig mit der Zusammensetzung 4 ist ebenso ungeeignet, da dieser sehr weich ist und somit keine ausreichende Formstabilität aufweist. Dies zeigte sich u.a. dann, wenn man versuchte Knödel aus einen Teig mit der Zusammensetzung 4 zu formen. Diese Knödel verloren unter dem Einfluss der Schwerkraft in wenigen Minuten ihre ursprüngliche Form, wenn diese auf eine ebene Fläche gelegt wurden. Die Teige mit den Zusammensetzungen 2 und 7 sind im Verhältnis zum Teig mit der Zusammensetzung 1 ebenfalls zu weich, zudem zeigt sich, dass insbesondere geformte Teige mit den Zusammensetzungen 2 und 7 schlechte Kocheigenschaften aufweisen und beim Garen zumindest teilweise zerfallen bzw. die ursprüngliche Form zur Gänze verlieren.

Die Ergebnisse des Texturanalysegeräts wurden mit den sensorischen Eigenschaften und den Verarbeitungseigenschaften korreliert. Dabei hat sich gezeigt, dass unter Heranziehung der Untersuchungsparameter aus Tabelle A der Teig eine maximale Widerstandskraft von vorzugsweise ca. 700 g und eine minimale Widerstandskraft von vorzugsweise ca. 500 g haben sollte, um für die kommerzielle Verwendung geeignet zu sein. Die obere Grenze von 700 g ergibt sich daraus, dass solche Teige sensorisch ungeeignet sind und als relativ hart empfunden werden (Zusammensetzungen 3, 5 und 6). Die Untergrenze von 500 g kann nicht unterschritten werden, da in diesem Fall die Formstabilität nicht gegeben ist (Zusammensetzung 4). Zieht man noch zusätzlich die Kocheigenschaften heran, die für ein solches Produkt ebenfalls von Bedeutung sind, sind auf Teige mit den Zusammensetzung 2 und 7 ungeeignet.

## Patentansprüche

1. Kartoffelteigprodukt umfassend
a) 45 bis 75 Gew% gegarte, zerkleinerte und geschälte Kartoffeln,
b) 3 bis 10 Gew% Kartoffelflocken und
c) 0,05 bis 4 Gew% mindestens eines als zellulosehaltiger Teil verzehrbarer Pflanzen oder Pflanzenteile gewonnenen pflanzlichen Faserstoffs.

2. Kartoffelteigprodukt nach Anspruch 1, **dadurch gekennzeichnet, dass** dieses 50 bis 75 Gew%, vorzugsweise 55 bis 70 Gew%, noch mehr bevorzugt 60 bis 70 Gew%, insbesondere 62 bis 66 Gew%, gegarte, zerkleinerte und geschälte Kartoffeln umfasst.

3. Kartoffelteigprodukt nach Anspruch 1 oder 2, **dadurch gekennzeichnet, dass** dieses 4 bis 8 Gew%, vorzugsweise 5 bis 8 Gew%, noch mehr bevorzugt 6 bis 8 Gew%, Kartoffelflocken umfasst.

4. Kartoffelteigprodukt nach einem der Ansprüche 1 bis 3, **dadurch gekennzeichnet, dass** dieses 0,1 bis 3 Gew%, vorzugsweise 0,2 bis 2 Gew%, noch mehr bevorzugt 0,3 bis 1 Gew%, mindestens eines pflanzlichen Faserstoffs umfasst.

5. Kartoffelteigprodukt nach einem der Ansprüche 1 bis 4, **dadurch gekennzeichnet, dass** der mindestens eine pflanzliche Faserstoff ausgewählt ist aus der Gruppe bestehend aus einem Faserstoff aus Kartoffel, Leguminosen, insbesondere Erbsen, und Flohsamen.

6. Kartoffelteigprodukt nach einem der Ansprüche 1 bis 5, **dadurch gekennzeichnet, dass** das Kartoffelteigprodukt 60 bis 70 Gew% gegarte, zerkleinerte und geschälte Kartoffeln, 6 bis 8 Gew% Kartoffelflocken und 0,3 bis 1 Gew% Faserstoffe aus Kartoffeln umfasst.

7. Kartoffelteigprodukt nach einem der Ansprüche 1 bis 6, **dadurch gekennzeichnet, dass** das Kartoffelteigprodukt 6 bis 20 Gew%, vorzugsweise 7 bis 18 Gew%, noch mehr bevorzugt 8 bis 16 Gew%, noch mehr bevorzugt 9 bis 14 Gew%, noch mehr bevorzugt 11 bis 14 Gew%, pflanzliche Stärke umfasst.

8. Kartoffelteigprodukt nach Anspruch 7, **dadurch gekennzeichnet, dass** die pflanzliche Stärke ausgewählt ist aus der Gruppe bestehend aus einer Stärke aus Kartoffeln, Reis, Mais, Weizen und Kombinationen davon.

9. Kartoffelteigprodukt nach einem der Ansprüche 1 bis 8, **dadurch gekennzeichnet, dass** das Kartoffelteigprodukt 2 bis 8 Gew%, vorzugsweise 3 bis 7 Gew %, noch mehr bevorzugt 4 bis 6 Gew%, Getreidegrieß, vorzugsweise Hartweizengrieß, umfasst.

10. Verfahren zur Herstellung eines Kartoffelteigprodukts nach einem der Ansprüche 1 bis 9 umfassend den Schritt des Vermischens von 45 bis 75 Gew% gegarte, zerkleinerte und geschälte Kartoffeln, 3 bis 10 Gew% Kartoffelflocken und 0,05 bis 4 Gew% mindestens eines als zellulosehaltiger Teil verzehrbarer Pflanzen oder Pflanzenteile gewonnenen pflanzlichen Faserstoffs.

## Claims

1. A potato dough product comprising
a) 45 to 75 wt.% cooked, chopped, and peeled potatoes,
b) 3 to 10 wt.% potato flakes, and
c) 0.05 to 4 wt.% of at least one vegetable pulp obtained as a cellulose-containing part of edible plants or plant parts.

2. The potato dough product according to Claim 1, **characterized in that** it comprises 50 to 75 wt.%, preferably 55 to 70 wt.%, still more preferably 60 to 70 wt.%, in particular 62 to 66 wt.% cooked, chopped, and peeled potatoes.

3. The potato dough product according to Claim 1 or 2, **characterized in that** it comprises 4 to 8 wt.%, preferably 5 to 8 wt.%, still more preferably 6 to 8 wt.% potato flakes.

4. The potato dough product according to any one of Claims 1 to 3, **characterized in that** it comprises 0.1 to 3 wt.%, preferably 0.2 to 2 wt.%, still more preferably 0.3 to 1 wt.% of at least one vegetable pulp.

5. The potato dough product according to any one of Claims 1 to 4, **characterized in that** the at least one vegetable pulp is selected from the group consisting of a pulp made of potatoes, legumes, in particular peas, and psyllium seeds.

6. The potato dough product according to any one of Claims 1 to 5, **characterized in that** the potato dough product comprises 60 to 70 wt.% cooked, chopped, and peeled potatoes, 6 to 8 wt.% potato flakes, and 0.3 to 1 wt.% pulp made of potatoes.

7. The potato dough product according to any one of Claims 1 to 6, **characterized in that** the potato dough product comprises 6 to 20 wt.%, preferably 7 to 18 wt.%, still more preferably 8 to 16 wt.%, still more preferably 9 to 14 wt.%, still more preferably 11 of 14 wt.% vegetable starch.

8. The potato dough product according to Claim 7, **characterized in that** the vegetable starch is selected from the group consisting of a starch made of potatoes, rice, maize, wheat, and combinations thereof.

9. The potato dough product according to any one of Claims 1 to 8, **characterized in that** the potato dough product comprises 2 to 8 wt.%, preferably 3 to 7 wt.%, still more preferably 4 to 6 wt.% grain semolina, preferably hard wheat semolina.

10. A method for producing a potato dough product according to any one of Claims 1 to 9, comprising the step of mixing 45 to 75 wt.% cooked, chopped, and peeled potatoes, 3 to 10 wt.% potato flakes, and 0.05 to 4 wt.% of at least one vegetable pulp obtained as a cellulose-containing part of edible plants or plant parts.

## Revendications

1. Produit à base de pâte de pommes de terre comprenant
a) entre 45 et 75 % en poids de pommes de terre cuites, écrasées et pelées,
b) entre 3 et 10 % en poids de flocons de pomme de terre et
c) entre 0,05 et 4 % en poids d'au moins une matière fibreuse végétale obtenue sous la forme d'une partie contenant de la cellulose de plantes ou de parties de plantes comestibles.

2. Produit à base de pâte de pommes de terre selon la revendication 1, **caractérisé en ce qu'**il contient entre 50 et 75 % en poids, de préférence entre 55 et 70 % en poids, mieux encore entre 60 et 70 % en poids, en particulier entre 62 et 66 % en poids de pommes de terre cuites, écrasées et pelées.

3. Produit à base de pâte de pommes de terre selon la revendication 1 ou 2, **caractérisé en ce qu'**il contient entre 4 et 8 % en poids, de préférence entre 5 et 8 % en poids, mieux encore entre 6 et 8 % en poids de flocons de pomme de terre.

4. Produit à base de pâte de pommes de terre selon l'une des revendications 1 à 3, **caractérisé en ce qu'**il contient entre 0,1 et 3 % en poids, de préférence entre 0,2 et 2 % en poids, mieux encore entre 0,3 et 1 % en poids d'au moins une matière fibreuse végétale.

5. Produit à base de pâte de pommes de terre selon l'une des revendications 1 à 4, **caractérisé en ce que** l'au moins une matière fibreuse végétale est choisie dans le groupe comprenant des fibres issues de pommes de terre, de légumineuses, en particulier de pois, et de graines de psyllium.

6. Produit à base de pâte de pommes de terre selon l'une des revendications 1 à 5, **caractérisé en ce qu'**il contient entre 60 et 70 % en poids de pommes de terre cuites, écrasées et pelées, entre 6 et 8 % en poids de flocons de pomme de terre et entre 0,3 et 1 % en poids de fibres issues de pommes de terre.

7. Produit à base de pâte de pommes de terre selon l'une des revendications 1 à 6, **caractérisé en ce qu'**il contient entre 6 et 20 % en poids, de préférence entre 7 et 18 % en poids, mieux encore entre 8 et 16 % en poids, mieux encore entre 9 et 14 % en poids, mieux encore entre 11 et 14 % en poids d'amidon végétal.

8. Produit à base de pâte de pommes de terre selon la revendication 7, **caractérisé en ce que** l'amidon végétal est choisi dans un groupe comprenant des amidons de pomme de terre, de riz, de maïs, de blé et des combinaisons de ceux-ci.

9. Produit à base de pâte de pommes de terre selon l'une des revendications 1 à 8, **caractérisé en ce que** le produit à base de pâte de pommes de terre contient entre 2 et 8 % en poids, de préférence entre 3 et 7 % en poids, mieux encore entre 4 et 6 % en poids de semoule de céréales, de préférence de semoule de blé dur.

10. Procédé pour la fabrication d'un produit à base de pâte de pommes de terre selon l'une des revendications 1 à 9 comprenant l'étape de mélange de 45 à 75 % en poids de pommes de terre cuites, écrasées et pelées, 3 à 10 % en poids de flocons de pomme de terre et 0,05 à 4 % en poids d'au moins une matière fibreuse végétale obtenue sous la forme d'une partie contenant de la cellulose de plantes ou de parties de plantes comestibles.
